# EUROPEAN PATENT APPLICATION

(11) **EP 3 065 057 A1**
(43) Date of publication of application: **07.09.2016**
(21) Application number: 13896240.2
(22) Date of filing: 28.10.2013
(51) Int. Cl.: G06F 12/16, H04N 5/907, H04N 5/91

(54) **DATA STORAGE DEVICE, DATA STORAGE METHOD, AND DATA STORAGE PROGRAM**

(71) Applicant: Fujitsu Limited, Kawasaki-shi, Kanagawa 211-8588 (JP)
(72) Inventor: KAWAHARA, Mari, Kawasaki-shi Kanagawa 211-8588 (JP); NAKADA, Shigeki, Kawasaki-shi Kanagawa 211-8588 (JP); UMEMOTO, Yasutaka, Kawasaki-shi Kanagawa 211-8588 (JP)
(74) Representative: Hoffmann Eitle
(86) International application number: PCT/JP2013/079177
(87) International publication number: WO 2015/063845

(57) **Abstract**

The storing unit (52) stores data sequentially input by sequentially repeating overwriting in blocks not determined as protection targets among a plurality of blocks in a storage area of a storage unit (30), each block having an upper limit in number of data rewrites. A registering unit (54), upon detection of a protection trigger for giving an instruction to protect data, registers, in data stored in a block by the storing unit, protection information for giving an instruction to protect data and block information indicating a block that stores data obtained a predetermined time before the detection of the protection trigger. A managing unit (55) manages, as blocks to be protected, blocks from the block that stores the data obtained the predetermined time before the detection to a block that stores data upon detection of a termination trigger for giving an instruction to terminate protection.

## Description

### [Technical Field]

The present invention relates to a data storing apparatus, a data storingmethod, and a data storing program.

### [Background Art]

Conventionally, there is known a technology for protecting data when a predetermined event is detected.

For example, there is known a monitoring system that stores therein video data when an abnormality occurs. In such a monitoring system, video data captured by a camera is cyclically stored in an overwriting manner in a storage unit using a flash memory, such as CompactFlash (registered trademark). Then, in the monitoring system, when an abnormality is detected, overwriting is inhibited for protection, starting from video data stored in the storage unit a predetermined time before detection of the abnormality. To protect the written data, data is read from a block of the storage unit in which data to be protected is written, a protection flag in header information is updated, and the data is rewritten in the storage unit.

### [Citation List]

### [Patent Citation]

Patent Literature 1: Japanese Laid-open Patent Publication No. 2011-172256
Patent Literature 2: Japanese Laid-open Patent Publication No. 2000-196996

### [Summary of Invention]

### [Technical Problem]

However, to protect the written data, if the data is read from the block in which the data to be protected is written, if the protection flag in the header information is updated, and if the data is rewritten, the number of data rewrites increases. The storage unit using a flash memory has a limit of the number of data rewrites. Therefore, if the number of data rewrites increases, an error may occur, and it may become difficult to store video data.

According to an aspect, an object is to provide a data storing apparatus, a data storing method, and a data storing program capable of preventing an increase in the number of data rewrites.

### [Solution to Problem]

According to an aspect of an embodiment, a data storage apparatus includes a storing unit that stores data sequentially input by sequentially repeating overwriting in blocks not determined as protection targets among a plurality of blocks in a storage area of a storage unit, each block having an upper limit in number of data rewrites; a registering unit that, upon detection of a protection trigger for giving an instruction to protect data, registers, in data stored in a block by the storing unit, protection information for giving an instruction to protect data and block information indicating a block that stores data obtained a predetermined time before the detection of the protection trigger; and a managing unit that manages, as blocks to be protected, blocks from the block that stores the data obtained the predetermined time before the detection to a block that stores data upon detection of a termination trigger for giving an instruction to terminate protection.

### [Advantageous Effects of Invention]

It is possible to prevent an increase in the number of data rewrites.

### [Brief Description of Drawings]

FIG. 1 is a diagram illustrating an example of a schematic configuration of an entire data storage system.
FIG. 2 is a diagram illustrating an example of an overall configuration of a data storing apparatus.
FIG. 3 is a diagram schematically illustrating a configuration of a storage area of a storage unit.
FIG. 4 is a diagram illustrating an example of a data structure of block management information.
FIG. 5 is a diagram illustrating an example of a data structure of file management information.
FIG. 6 is a diagram illustrating an example of a sequence to store video data.
FIG. 7 is a diagram illustrating an example of a sequence to store video data.
FIG. 8 is a diagram illustrating an example of a sequence to store video data.
FIG. 9 is a diagram illustrating an example of a sequence to store video data.
FIG. 10 is a diagram illustrating an example of a sequence to store video data.
FIG. 11 is a diagram illustrating an example of a sequence to store video data.
FIG. 12 is a diagram illustrating an example of a sequence to store video data.
FIG. 13 is a diagram illustrating an example of a sequence to release protection of data.
FIG. 14 is a diagram schematically illustrating a sequence to release protection of data.
FIG. 15 is a diagram for explaining the number of data rewrites.
FIG. 16 is a flowchart illustrating the flow of a data storing process.
FIG. 17 is a diagram illustrating a computer that executes a data storing program.

### [Embodiments for Carrying Out the Invention]

Embodiments of a data storing apparatus, a data storing method, and a data storing program according to the present invention will be described in detail below based on the drawings. The present invention is not limited by the embodiments. The embodiments may be combined appropriately as long as the processing contents do not conflict with each other. In the embodiments below, an example will be described in which video data is stored.

### [a] First Embodiment

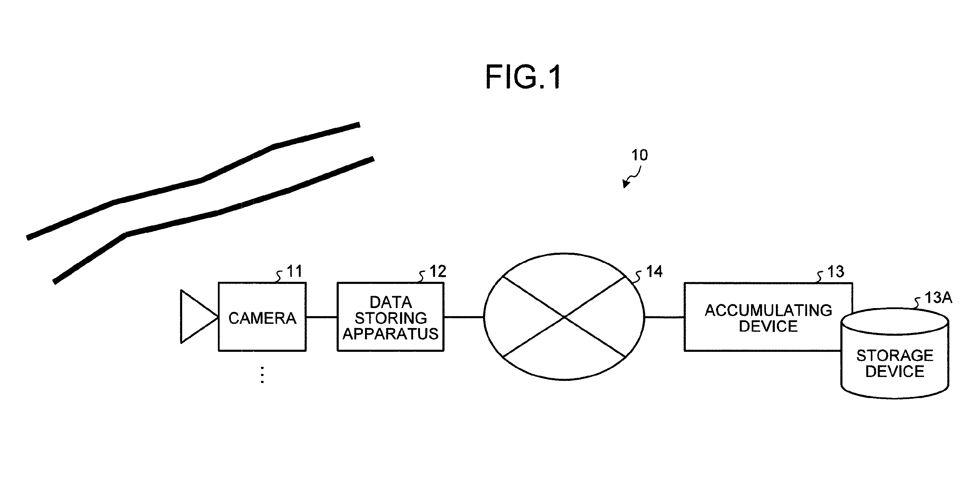

A data storage system 10 according to a first embodiment will be described. The data storage system 10 is a system that stores therein video data when a predetermined event occurs. In the following, an example will be described in which an earthquake is detected as the predetermined event, and video data at the time of occurrence of the earthquake is stored. FIG. 1 is a diagram illustrating an example of a schematic configuration of the entire data storage system. As illustrated in FIG. 1, the data storage system 10 includes a camera 11, a data storing apparatus 12, and an accumulating device 13. The camera 11 is connected to the data storing apparatus 12. Furthermore, the data storing apparatus 12 and the accumulating device 13 are communicably connected through a network 14, and can exchange various kinds of information. Examples of the network 14 include an arbitrary communication network, such as a Local Area Network (LAN), a Virtual Private Network (VPN), or a mobile communication network, regardless of whether it is wired or wireless. Incidentally, while the data storage system 10 includes the single camera 11 and the single data storing apparatus 12 in the example in FIG. 1, the disclosed system is not limited to this example, and the number of the cameras 11 and the number of the data storing apparatus 12 may be arbitrary. Furthermore, the data storage system 10 may include a plurality of the accumulating devices 13. Moreover, while the single camera 11 is connected to the data storing apparatus 12 in the example in FIG. 1, the disclosed system is not limited to this example, and a plurality of the cameras 11 may be connected to the data storing apparatus 12.

The camera 11 is an imaging device that captures video. The camera 11 is arranged such that a monitoring target is located in an imaging range. The example in FIG. 1 illustrates a case in which the monitoring target is a river. The camera 11 is arranged such that the river is located in the imaging range. Meanwhile, the monitoring target is not limited to a river, but may be anything. The camera 11 continuously captures images at a predetermined frame rate, and outputs video data of the continuously-captured images to the data storing apparatus 12.

The data storing apparatus 12 is a device that stores therein video data. The data storing apparatus 12 receives an input of video data output from the camera 11. The data storing apparatus 12 transfers the input video data to the accumulating device 13. Furthermore, the data storing apparatus 12 temporarily stores therein the input video data. Then, for example, when a predetermined event is detected, the data storing apparatus 12 protects data from a predetermined time before the detection of the event, and stores video data at the time of detecting the event in a storage medium. Incidentally, a power-supply device, such as an Uninterruptible Power Supply (UPS), which can accumulate electric power and supply the accumulated electric power, is connected to each of the camera 11 and the data storing apparatus 12. Even if the supply of electric power from a commercial power source is suspended due to power outage or the like, the camera 11 and the data storing apparatus 12 can capture video and store the captured video data with the aid of electric power supplied from the power-supply device.

The accumulating device 13 is a device that accumulates video data. The accumulating device 13 is, for example, a computer, such as a server computer. The accumulating device 13 includes a high-capacity storage device 13A, such as a disk array device. The storage device 13A has a storage capacity capable of accumulating video data transferred from a plurality of the data storing apparatuses 12 for a predetermined storage period. The accumulating device 13 accumulates video data transferred from the data storing apparatus 12 in the storage device 13A, and stores the video data for a predetermined storage period.

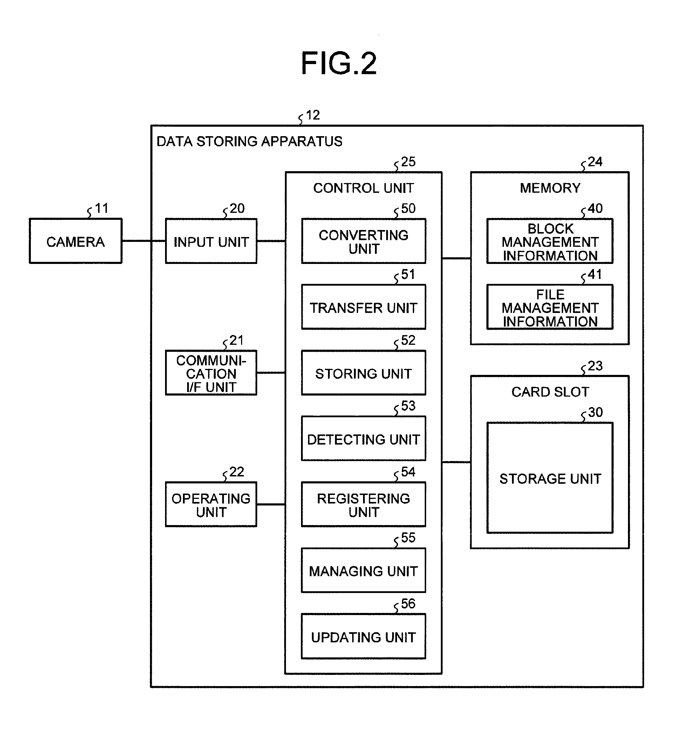

Next, a configuration of the data storing apparatus 12 according to the first embodiment will be described. FIG. 2 is a diagram illustrating an example of an overall configuration of the data storing apparatus. As illustrated in FIG. 2, the data storing apparatus 12 includes an input unit 20, a communication interface (I/F) unit 21, an operating unit 22, a card slot 23, a memory 24, and a control unit 25.

The input unit 20 is an interface for inputting video data. The input unit 20 is connected to the camera 11, and receives an input of video data output from the camera 11. Examples of the input unit 20 as described above include an input terminal, such as a composite video terminal, a separate video terminal, a component video terminal, a D video terminal, and a High Definition Multimedia Interface (HDMI) (registered trademark) terminal. Incidentally, the input unit 20 may be a general-purpose terminal, such as a Universal Serial Bus (USB).

The communication I/F unit 21 is an interface for controlling communication with other devices. The communication I/F unit 21 transmits and receives various kinds of information with other devices through the network 14. For example, the communication I/F unit 21 transmits video data to the accumulating device 13. As an example of the communication I/F unit 21, a network interface card, such as a LAN card, may be used.

The operating unit 22 is an interface that accepts various operations. Examples of the operating unit 22 include an input device, such as an operation panel, a mouse, or a keyboard. The operating unit 22 accepts an operation input from an administrator or the like who manages the system, and outputs operation information indicating contents of the accepted operation to the control unit 25.

The card slot 23 is an interface that inputs and outputs data from and to a storage unit 30. The storage unit 30 can be attached to and detached from the card slot 23. The card slot 23 writes and reads data to and from the attached storage unit 30.

The storage unit 30 is a data rewritable storage medium that includes a built-in nonvolatile semiconductor memory, such as a flash memory. The storage unit 30 maintains written data. Examples of the storage unit 30 include a memory card, such as a Secure Digital memory card (SD memory card) or CompactFlash (registered trademark). A storage area of the storage unit 30 as described above is divided into a plurality of blocks, and data is written in a block unit. For example, a storage area of CompactFlash (registered trademark) is divided into blocks each having a predetermined size, such as 16 KBytes (KB), 32 KB, or 64 KB, and data is written for each of the blocks.

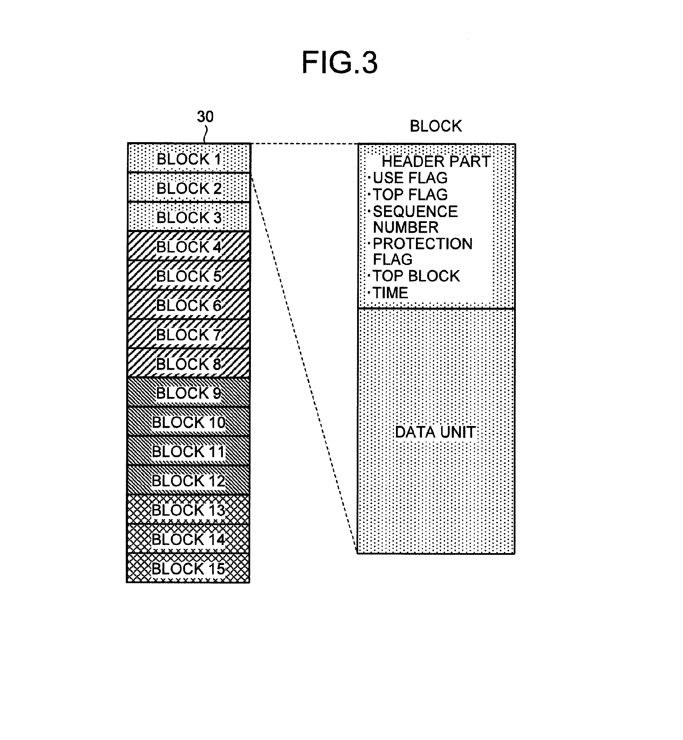

FIG. 3 is a diagram schematically illustrating a configuration of the storage area of the storage unit. In the example in FIG. 3, the storage area of the storage unit 30 is divided into 15 blocks. In each of the blocks, a block number for identifying each block is set. In the example in FIG. 3, block numbers 1 to 15 are set for the blocks. In the following, when the blocks with the block numbers 1 to 15 are distinguished from one another, they are denoted by the block numbers. Incidentally, the example in FIG. 3 schematically illustrates the storage area of the storage unit 30, and the number of the blocks is not limited to this example. Each of the blocks can store therein data with a predetermined size. In the first embodiment, data written in each of the blocks is segmented into a header part and a data part. The data part is an area for storing video data. The header part is an area for storing various kinds of header information on data stored in the data part. In the first embodiment, a use flag, a TOP flag, a sequence number, a protection flag, a TOP block, and a time are stored, as pieces of the header information, in the header part. Details of the pieces of the header information will be described later.

Referring back to FIG. 2, the memory 24 is a storage device that temporarily stores therein various kinds of data. The memory 24 is a data rewritable volatile semiconductor memory, such as a Random Access Memory (RAM). The memory 24 temporarily stores therein various kinds of data used in a process performed by the control unit 25. For example, the memory 24 stores therein block management information 40 and file management information 41.

The block management information 40 is data that stores the header information on each of the blocks of the storage unit 30 attached to the card slot 23. If the data storing apparatus 12 reads the header information on each of the blocks of the storage unit 30 each time from the storage unit 30 through the card slot 23, access to the storage unit 30 is increased. Furthermore, in general, it takes a longer time to access data stored in the storage unit 30 than it takes to access data stored in the memory 24. Therefore, the data storing apparatus 12 according to the first embodiment stores, in the block management information 40, a copy of the header information on each of the blocks of the storage unit 30 attached to the card slot 23. When the storage unit 30 is newly attached to the card slot 23, the header information is read from each of the blocks of the attached storage unit 30 and the block management information 40 is generated. Furthermore, when the header information is updated from each of the blocks of the attached storage unit 30, the block management information 40 is updated with the same header information. Incidentally, the block management information 40 need not store all pieces of the header information, but only has to store pieces of header information used for a process.

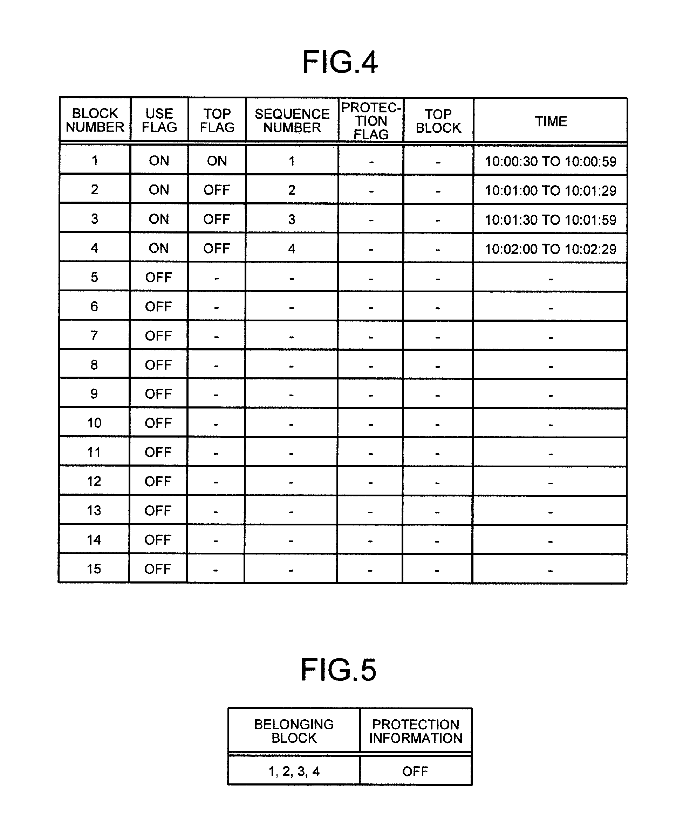

FIG. 4 is a diagram illustrating an example of a data structure of the block management information. As illustrated in FIG. 4, the block management information 40 includes items such as "block number", "use flag", "TOP flag", "sequence number", "protection flag", "TOP block", and "time". The item of the block number is an area for storing a block number indicating information on which of the blocks is provided by a record. In the first embodiment, in the item of the block number, numbers 1 to 15 corresponding to the block 1 to the block 15 illustrated in FIG. 3 are stored. It is indicated that a record with the block number "1" provides information on the block 1. The item of the use flag is an area for storing information indicating whether valid data is stored in the block. In the item of the use flag, ON is stored when data stored in the block is valid, and OFF is stored when the data is invalid, for example, when the data is deleted data. The item of the TOP flag is an area for storing information indicating whether data stored in the block is data at the top of a file. In the item of the TOP flag, ON is stored when the data stored in the block is data at the top of a file, and OFF is stored when the data is not data at the top of a file. The item of the sequence number is an area for storing a sequence number of data stored in the block. In the data storing apparatus 12 according to the first embodiment, data with a greater size than the size of a block is stored by being divided into pieces of data each having the size of each block. When the data is divided into pieces of data for each block, consecutive sequence numbers for identifying the respective pieces of the data are sequentially assigned to the pieces of the data in the blocks. In the item of the sequence number, a sequence number assigned to each piece of the data in the block is stored. The item of the protection flag is an area for storing information whether data is to be protected. In the item of the protection flag, ON is stored when the data is to be protected, and OFF is stored when the data is not to be protected. The item of the TOP block is an area for storing the first block number for storing data to be protected. In the item of the TOP block, the first block number for storing data to be protected is stored. The item of the time is an area for storing time to be associated with data in the block. For example, temporally-stored data, such as video data, includes information capable of specifying date and time of recording video. For example, video data includes information on a time at which imaging is started or information on an elapsed time since the first data. In the item of the time, a record start time and a record end time of data stored in the block are stored. In the example in FIG. 4, the block with the block number 1 stores data because the use flag is set to ON, and stores data at the top of a file because the TOP flag is set to ON. Furthermore, as for the block with the block number 1, the sequence number of 1 is assigned, the protection flag and the TOP block remain blank, and the time of the stored data is 10:00:30 to 10:00:59.

Referring back to FIG. 2, the file management information 41 is data that stores management information for managing blocks in which pieces of data to be a single file are stored. To simplify management, the data storing apparatus 12 according to the first embodiment manages blocks that store pieces of data to be a single file, by using the file management information 41 separately from the block management information 40.

FIG. 5 is a diagram illustrating an example of a data structure of the file management information. As illustrated in FIG. 5, the file management information 41 includes items such as "belonging block" and "protection information". The item of the belonging block is an area for storing the block numbers of blocks that manage pieces of stored data as a single file. The item of the protection information is an area for storing information indicating whether the file is data to be protected. In the item of the protection information, ON is stored when the file is data to be protected, and OFF is stored when the file is not data to be protected. In the example in FIG. 5, pieces of data in the blocks with the block numbers 1, 2, 3, and 4 are managed as a single file, and the pieces of the data are not to be protected because the protection information is set to "OFF".

Incidentally, the data storing apparatus 12 may manage pieces of data in blocks to be a single file, by using the above-described block management information 40. For example, the data storing apparatus 12 may specify a start block and an end block from the above-described block management information 40, and may manage pieces of data in blocks between the start block and the end block as data of a single file. For example, the start block is a block for which the TOP flag is set to ON in the block management information 40. Furthermore, when the sequence numbers of all of the blocks are cyclically referred to in order of the block number, the start block is a block with a smaller sequence number between two blocks with non-consecutive sequence numbers. The end block is a block just before the start block in order of the block number.

The file management information 41 is generated from the block management information 40 at a predetermined timing, for example, when the storage unit 30 is newly attached to the card slot 23 and the block management information 40 is generated. For example, in the file management information 41, the start block and the end block are specified from the block management information 40, and pieces of data in blocks between the start block and the end block are registered as data of a single file.

Referring back to FIG. 2, the control unit 25 is a device that controls the data storing apparatus 12. As the control unit 25, an electronic circuit, such as a Central Processing Unit (CPU) or a Micro Processing Unit (MPU), or an integrated circuit, such as an Application Specific Integrated Circuit (ASIC) or a Field Programmable Gate Array (FPGA), may be used. The control unit 25 includes an internal memory for storing a program that defines the flow of various processes or control data, and performs various processes with the program and the control data. The control unit 25 functions as various processing units by executing various programs. For example, the control unit 25 includes a converting unit 50, a transfer unit 51, a storing unit 52, a detecting unit 53, a registering unit 54, a managing unit 55, and an updating unit 56.

The converting unit 50 performs various conversions. For example, the converting unit 50 converts video data input from the camera 11 into video data in a predetermined data format. For example, the converting unit 50 converts video data input from the camera 11 into a Moving Picture Experts Group phase 2 (MPEG2) format to compress the data. In the first embodiment, the converting unit 50 converts video data input from the camera 11 into video data in MPEG2 format at 6 Mbps, for example.

The transfer unit 51 performs various kinds of transfer. For example, the transfer unit 51 transfers video data that is captured by the camera 11 and converted by the converting unit 50 to the accumulating device 13. Consequently, the video data is transferred to the accumulating device 13 through the network 14 and accumulated in the storage device 13A.

The storing unit 52 performs various kinds of storage. For example, the storing unit 52 stores video data that is captured by the camera 11 and converted by the converting unit 50 in the storage unit 30 by dividing the video data into pieces of data each having a size of a block. For example, the storing unit 52 sequentially repeats overwriting in blocks that are not determined as protection targets among the blocks of the storage unit 30 on the basis of the block management information 40, and stores pieces of sequentially-input video data. For example, the storing unit 52 sequentially stores pieces of video data converted by the converting unit 50 in the memory 24. Then, if the size of the pieces of the video data accumulated in the memory 24 reach a size of a data part stored in a block of the storage unit 30, the storing unit 52 generates header information on the pieces of the accumulated video data. It is sufficient to accumulate pieces of data for one block; however, it may be possible to accumulate pieces of data for a plurality of blocks. For example, the storing unit 52 generates header information, in which the use flag is set to ON, in which the sequence number is set to a serial number of data, in which the time is set to a record start time and a record end time of the pieces of the accumulated data, in which the protection flag is set to OFF, and in which the TOP block remains blank indicating no setting. Furthermore, if the pieces of the accumulated video data are at the top of a file, the storing unit 52 sets the TOP flag to ON. Then, the storing unit 52 sequentially and cyclically store pieces of data, in each of which the generated header information is set in the header part and the pieces of the accumulated video data are set in the data part, in blocks that are not determined as protection targets in order of the block number.

The detecting unit 53 performs various kinds of detection. For example, the detecting unit 53 detects a protection trigger for giving an instruction to protect the data. For example, the detecting unit 53 detects occurrence of an earthquake as the protection trigger. For example, if a predetermined acceleration or higher is continued for a predetermined time or longer in an acceleration sensor (not illustrated) connected to the data storing apparatus 12, the detecting unit 53 detects that an earthquake has occurred. Incidentally, the detecting unit 53 may detect occurrence of an earthquake from video data input from the camera 11. For example, the detecting unit 53 detects amounts of deviation in the horizontal direction and the vertical direction between video frames of video data input from the camera 11. For example, the detecting unit 53 compares the frames and detects amounts of deviation in the horizontal direction and the vertical direction from a change in the position of an object between the frames. Then, if a state, in which the detected amounts of deviation in the horizontal direction and the vertical direction fall within a predetermined range of the amount of deviation indicating the earthquake intensity, is continued for a predetermined time or longer, the detecting unit 53 detects that an earthquake has occurred.

The registering unit 54 performs various kinds of registration. For example, when the detecting unit 53 detects the protection trigger, the registering unit 54 registers information for protecting data obtained a predetermined time before the detection of the protection trigger, in data that is to be stored in a block by the storing unit 52. For example, the registering unit 54 changes the protection flag to ON in a header part of data to be stored in a block by the storing unit 52, and sets the TOP block to the block number of a block in which the data obtained the predetermined time before the detection of the protection trigger has been stored. The data including the changed protection flag and the changed TOP block is stored in the block by the storing unit 52.

The managing unit 55 performs various kinds of management. For example, the managing unit 55 manages information in the block management information 40 and the file management information 41. For example, if the storing unit 52 stores data in a block of the storage unit 30, the managing unit 55 updates header information in a record with a block number for which the data is stored in the block management information 40, with the header information on the stored data. Furthermore, the managing unit 55 updates the file management information 41 and registers the block number of the block that stores data of a file, for each file. Moreover, upon detection of the protection trigger, the managing unit 55 manages, as protection target blocks, blocks from the block that stores the data obtained the predetermined time before the detection of the protection trigger to a block that stores data upon detection of a termination trigger for giving an instruction to terminate protection.

The updating unit 56 performs various kinds of update. For example, when an instruction to release protection of the data is provided, the updating unit 56 updates the protection flag of a block, in which data with the protection flag of ON has been stored, to OFF. For example, the updating unit 56 copies data for which the protection flag has been set to ON because of detection of the protection trigger and which has been stored in a block by the storing unit 52, and stores the copy in the memory 24. Then, if an instruction for the release is provided, the updating unit 56 updates the protection flag of the data stored in the memory 24 to OFF, and overwrites data in the block, in which the protection flag has been set to ON, with the updated data.

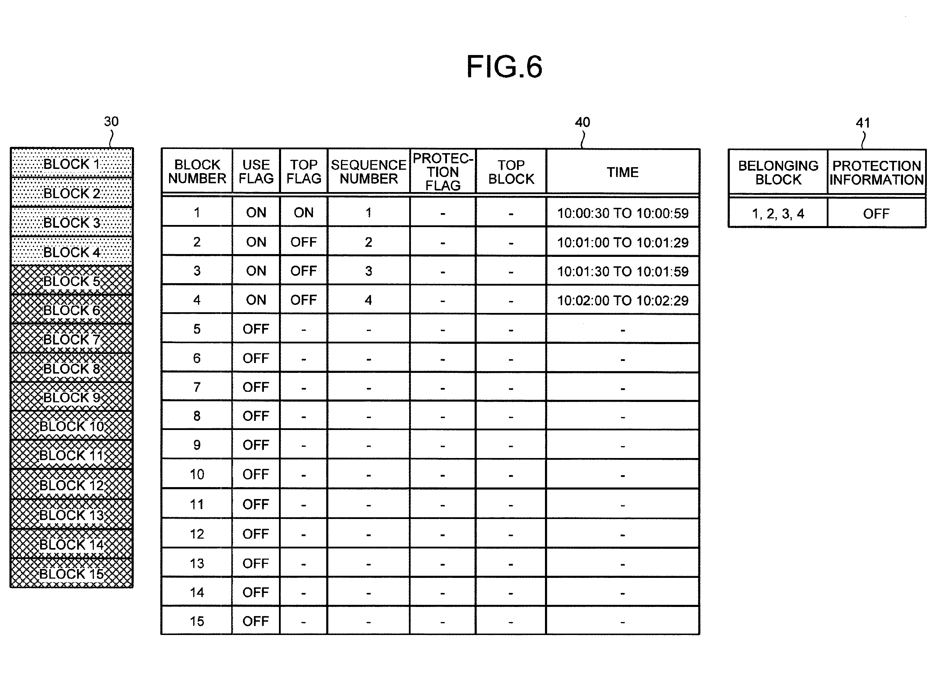

Next, a sequence to store video data by the data storing apparatus 12 according to the first embodiment will be described. FIG. 6 to FIG. 12 are diagrams illustrating examples of the sequence to store video data.

Video data captured by the camera 11 is sequentially input to the data storing apparatus 12. In the data storing apparatus 12, the converting unit 50 converts the video data input from the camera 11 into video data in a predetermined data format, and the storing unit 52 divides the video data into pieces of data each having a size of a block and stores the pieces of the data in the storage unit 30. When the storing unit 52 stores the pieces of the data in the blocks of the storage unit 30, the managing unit 55 updates pieces of header information in records corresponding to the block numbers for which the pieces of the data are stored in the block management information 40, with pieces of header information on the pieces of the stored data. Furthermore, the managing unit 55 registers, in the file management information 41, the block numbers of blocks that store data of a file, for each file.

The example in FIG. 6 illustrates a state in which the storage unit 30 is initialized and then pieces of video data are stored in the blocks 1 to 4. For example, the use flag in the block management information 40 is set to OFF indicating no-storage when the storage unit 30 is initialized, and is updated to ON when a piece of data is first stored after the initialization. In the example in FIG. 6, the use flags of the blocks 1 to 4 are set to ON, and the use flags of the blocks 5 to 15 are set to OFF. In the TOP flag, ON is stored when a piece of data stored in the block is data at the top of a file, and OFF is stored when the piece of the data is not data at the top of a file. The sequence number indicates the order of the piece of the data. The time indicates a record start time and a record end time of the piece of the stored data. In the example in FIG. 6, among the blocks 1 to 4 with the consecutive sequence numbers, only the block 1 has the TOP flag of ON; therefore, the pieces of the data in the blocks 1 to 4 are assumed as a single file with the piece of the data in the block 1 at the top.

The belonging block in the file management information 41 stores the block numbers of the blocks in which the pieces of the data as a single file are stored. The protection information in the file management information 41 is set to OFF when overwriting is allowed, and set to OFF when overwriting is inhibited for protection. In the example in FIG. 6, the pieces of the data as a single file are stored in the blocks with the block numbers 1 to 4, and the protection information is set to OFF, which indicates that overwriting is allowed.

Upon detection of the protection trigger, the data storing apparatus 12 protects data by inhibiting overwriting of data starting from data obtained a predetermined time before the detection of the protection trigger. Upon detection of the protection trigger, the registering unit 54 changes the protection flag in the header part of data being accumulated in the memory 24 to ON, and changes the TOP block to the block number of a block in which the data obtained the predetermined time before the detection of the protection trigger has been stored. If the size of the data accumulated in the memory 24 reaches the size of the data part to be stored in a block of the storage unit 30, the storing unit 52 sets the accumulated video data in the data part, sets the header information in the header part, and stores the data in the storage unit 30.

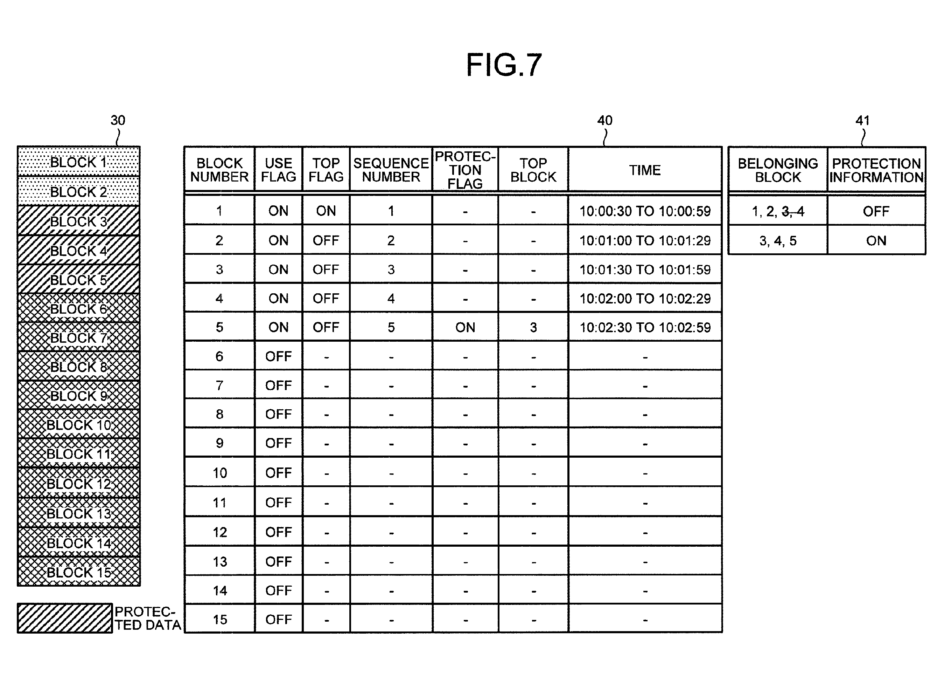

The example in FIG. 7 illustrates a state in which the protection trigger is detected while a piece of data for the block 5 is being accumulated. In the first embodiment, a predetermined time before the start of protection is set to, for example, one minute. In the block management information 40, the protection flag of the block number 5 is set to ON, and the block number 3 that stores a piece of data one minute before the start of protection is registered in the TOP block.

The managing unit 55 updates the file management information 41 such that pieces of protected data are provided as a different file. In the example in FIG. 7, the file management information 41 is updated such that the block numbers 1 and 2 are provided as a single file and the block numbers 3, 4, and 5 are provided as a different single file. Furthermore, as for the file with the block numbers 3, 4, and 5, the protection information is set to ON to inhibit overwriting.

The data storing apparatus 12 stores, as pieces of protected data, pieces of video data captured by the camera 11 in the storage unit 30 until a protection termination trigger is detected.

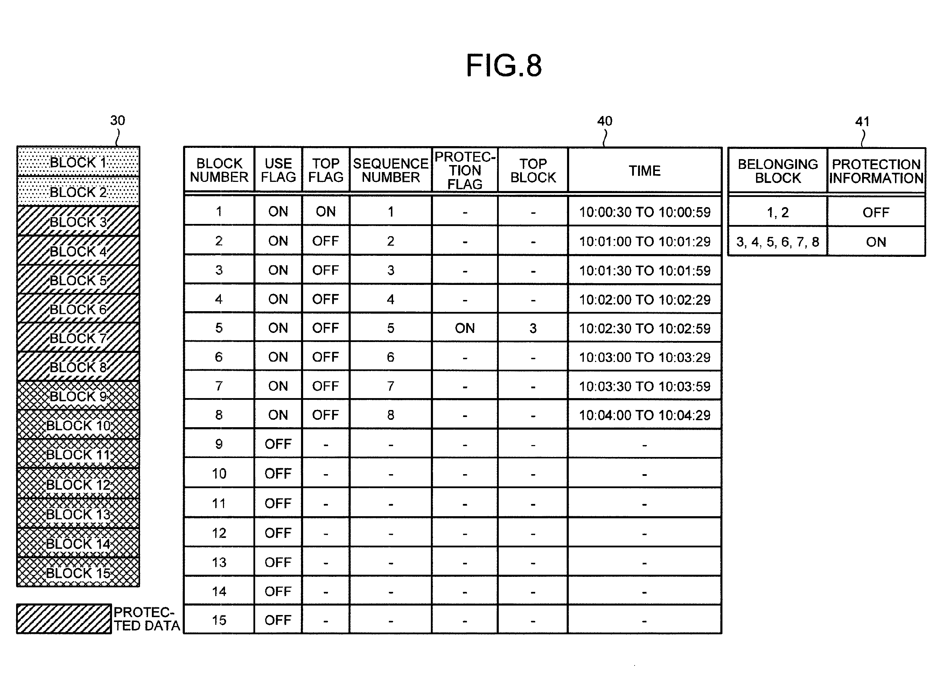

The example in FIG. 8 illustrates a state in which pieces of data in blocks until the block 8 are accumulated as pieces of protected data. In the example in FIG. 8, pieces of data are further stored in the blocks with the block numbers 6 to 8. The managing unit 55 registers, in the file management information 41, the block numbers 3 to 8 as a single file and sets the protection information to ON.

Upon detection of the protection termination trigger, the data storing apparatus 12 releases the protection flag starting from a piece of data in a block next to the block of a piece of data being accumulated in the memory 24, and stores the piece of the data in the next block as a different file in the storage unit 30. The protection termination trigger may be accepted by the operating unit 22 from an administrator or the like. Furthermore, the protection termination trigger may be accepted from other devices through the network 14. Moreover, the protection termination trigger may be generated after a specified time since the detection of the protection trigger. Upon detection of the protection termination trigger, the managing unit 55 updates the file management information 41 such that pieces of protected data are provided as a single file and pieces of subsequent data are provided as a different file.

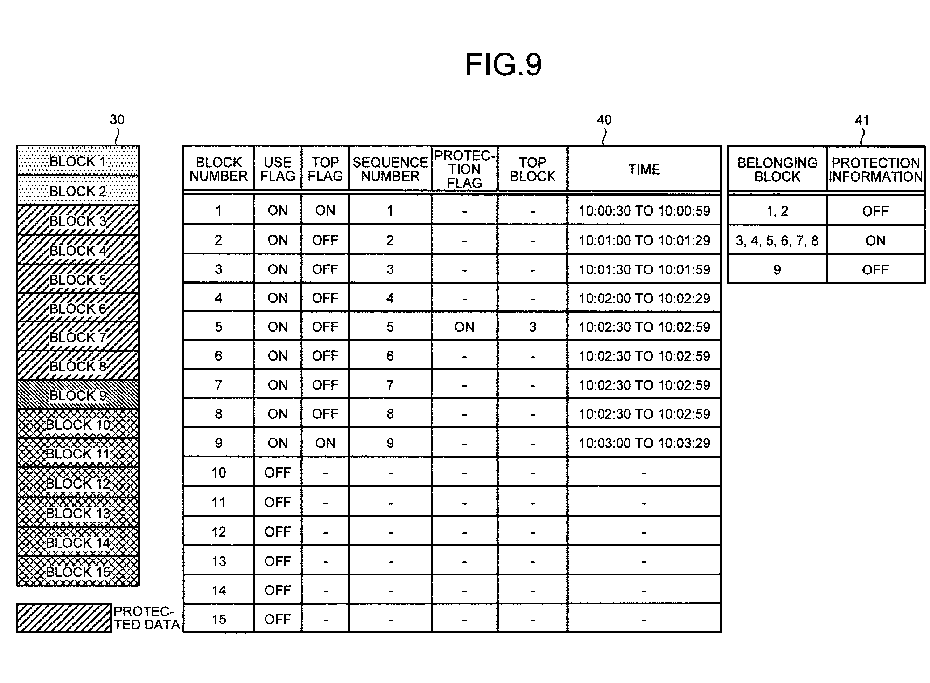

The example in FIG. 9 illustrates a state in which the protection termination trigger is detected while a piece of data for the block 8 is being accumulated, and the protection flag is released starting from a piece of data in the block 9. In the example in FIG. 9, the TOP flag of the block with the block number 9 is set to ON.
The managing unit 55 registers the block number 9 as a different file in the file management information 41 and sets the protection information to OFF.

The data storing apparatus 12 stores video data captured by the camera 11 in the storage unit 30 in order of the block number.

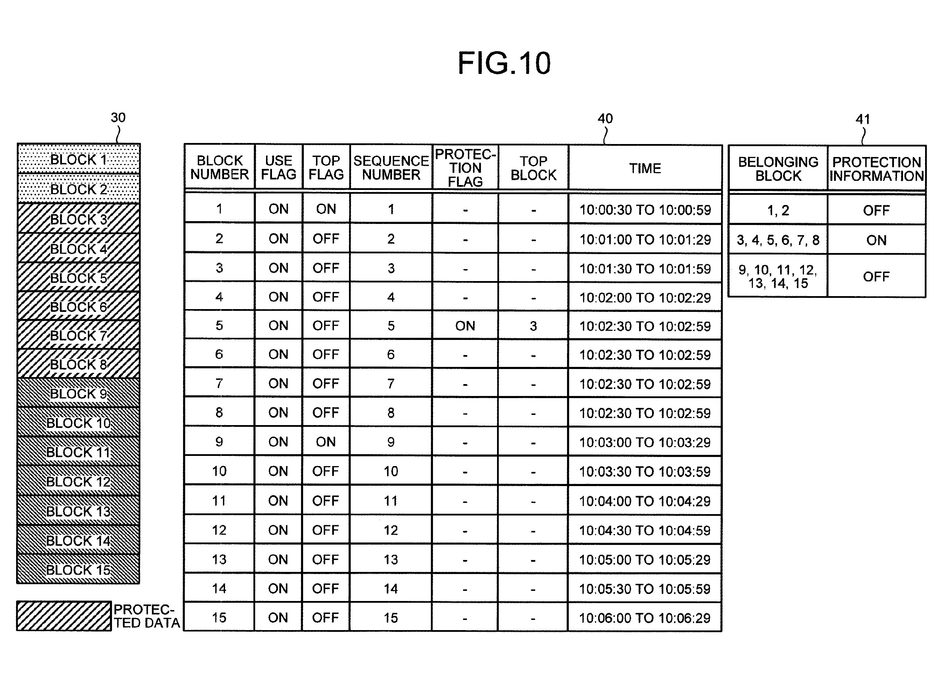

The example in FIG. 10 illustrates a state in which pieces of data are stored in blocks until the block 15. In the example in FIG. 10, the use flag of the block with the block number 15 is set to ON, and a piece of data is stored. The managing unit 55 registers, in the file management information 41, the block numbers 9 to 15 as a single file and sets the protection information to OFF.

The data storing apparatus 12, upon storing a piece of data in the last block with the greatest block number, uses the first block with the smallest block number as a write target block in order to circulate the write target block. The storing unit 52 refers to the file management information 41, and if the protection information on a file including the block number of the write target block is set to OFF and the file is not data to be protected, the storing unit 52 stores data in the write target block. In contrast, if the protection information on the file including the block number of the write target block is set to ON and the file is data to be protected, the storing unit 52 cyclically increments the block number and obtains a block with the subsequent block number as the write target block. Then, the storing unit 52 refers to the file management information 41, and determines again whether the write target block is data to be protected.

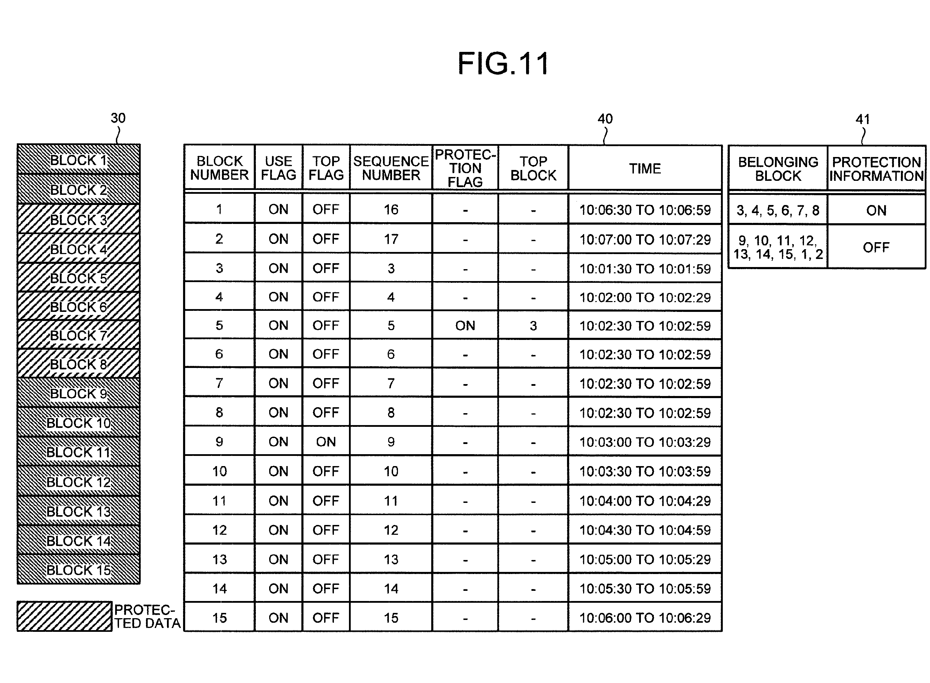

The example in FIG. 11 illustrates a state in which pieces of data are stored in the blocks 1 and 2 again. In the example in FIG. 11, pieces of data are stored in an overwriting manner in the blocks with the block numbers 1 and 2, for which the protection information is set to OFF. The sequence numbers of the block numbers 1 and 2 are continued from the block number 15. Therefore, it is possible to determine that the pieces of the data in the blocks with the block numbers 1 and 2 are pieces of data continued from a piece of data in the block with the block number 15. The managing unit 55 registers, in the file management information 41, the overwritten block numbers 1 and 2 as pieces of data of the same file as the block numbers 9 to 15.

In the file management information 41, the protection information for the blocks with the block numbers 3 to 8 is set to ON. Therefore, in the state illustrated in FIG. 11, the storing unit 52 stores a piece of data by using, as the write target block, the block with the block number 9 subsequent to the block numbers 3 to 8.

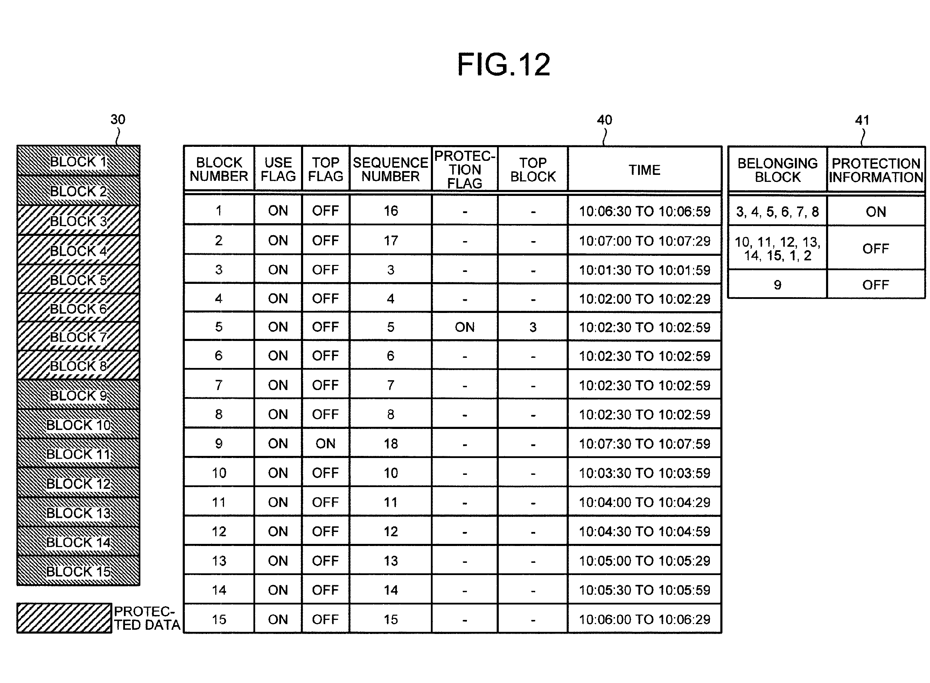

The example in FIG. 12 illustrates a state in which a piece of data is stored in the block 9 again. In the example in FIG. 12, the sequence number of the block number 9 is continued from the sequence number of the block number 2. Therefore, it is possible to determine that the piece of the data in the block with the block number 9 is data continued from a piece of data in the block with the block number 2. The managing unit 55 registers, in the file management information 41, the overwritten block number 9 as a different file. Incidentally, the managing unit 55 may register it as data in the same file as the block numbers 10 to 15, 1, and 2 in the file management information 41.

The data storing apparatus 12 sequentially repeats overwriting in blocks that are not determined as protection targets, and stores pieces of sequentially-input data in the storage unit 30.

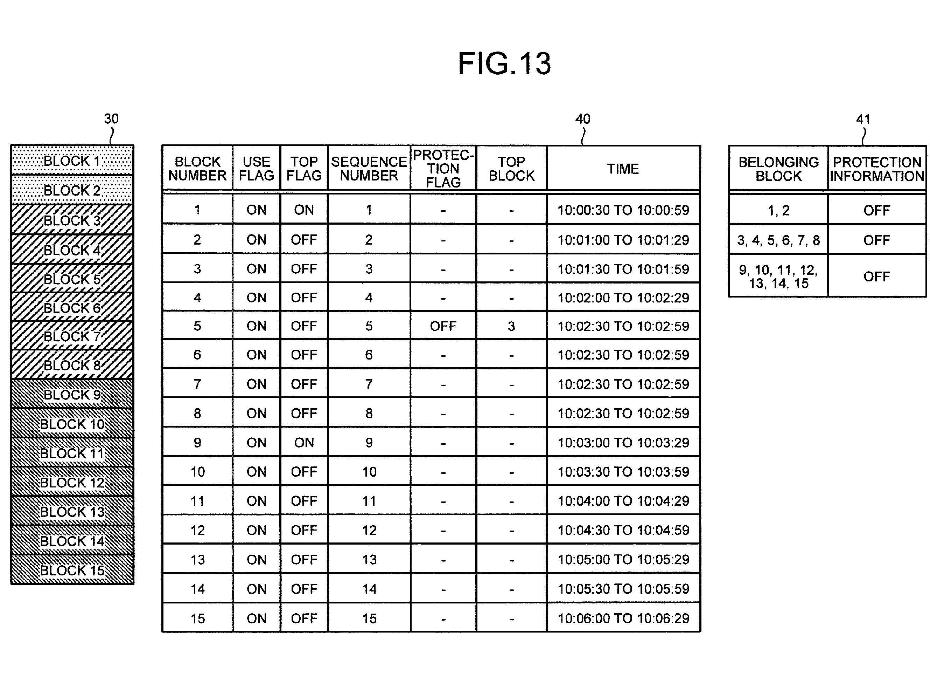

Next, a sequence to release protection of data by the data storing apparatus 12 according to the first embodiment will be described. FIG. 13 is a diagram illustrating an example of the sequence to release protection of data.

In the data storing apparatus 12, when an instruction to release protection of data is provided, the updating unit 56 updates the protection flag of a block, in which data with the protection flag of ON has been stored, to OFF. In the example in FIG. 13, the updating unit 56 updates the protection flag of the block with the block number 5, in which the protection flag has been set to ON, to OFF in each of the storage unit 30 and the block management information 40. Furthermore, the updating unit 56 updates the protection information on a file including the block number 5 in the file management information 41 to OFF.

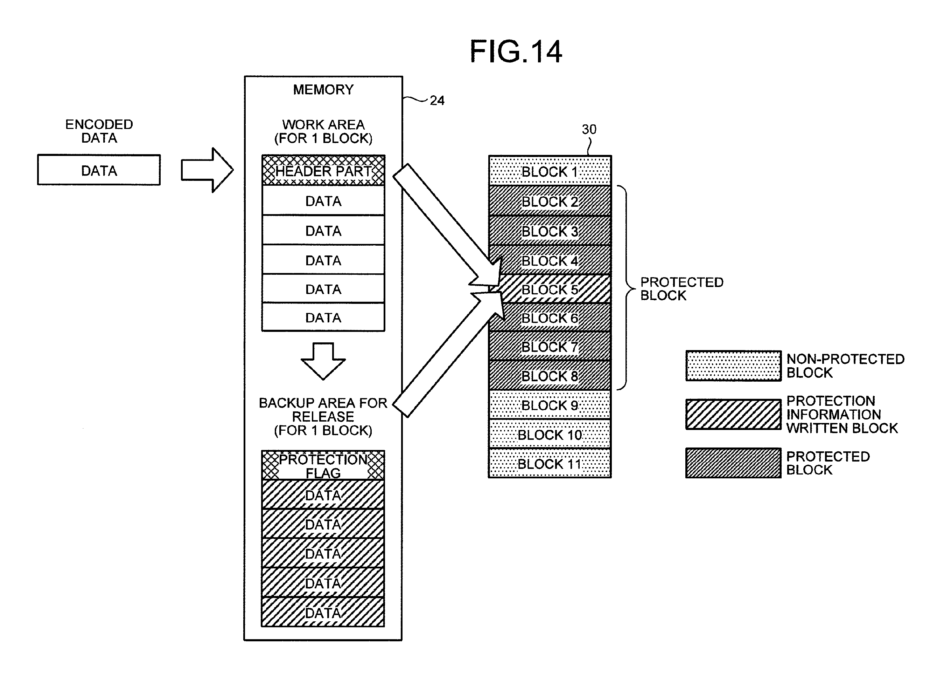

Next, a sequence to release protection of data by the data storing apparatus 12 according to the first embodiment will be described. FIG. 14 is a diagram schematically illustrating the sequence to release protection of data.

The storing unit 52 sequentially accumulates pieces of data in the memory 24, and stores the pieces of the data in the storage unit 30 when the size of the pieces of the data accumulated in the memory 24 reach the size of a data part to be stored in a block of the storage unit 30. If the protection trigger is detected, the protection flag of each piece of the data accumulated in the memory 24 at the time of the detection of the protection trigger is set to ON, and the block number of a block that stores therein data obtained a predetermined time before the detection of the protection trigger is stored in the TOP block. The updating unit 56 stores the data, which is to be stored in the block at the time of the detection of the protection trigger, in the memory 24 for backup. Then, if an instruction for release is provided, the storing unit 52 updates the protection flag of the backup data stored in the memory 24 to OFF, and overwrites the data in the block, in which the protection flag has been set to ON and data has been stored, with the updated data. In the example in FIG. 14, data with the protection flag of ON is written in the block 5, so that the data in the block 5 is stored in the memory 24 for backup. Then, if an instruction for release is provided, the protection flag of the data in the block 5 stored in the memory 24 is updated to OFF, and the data in the block 5 is overwritten.

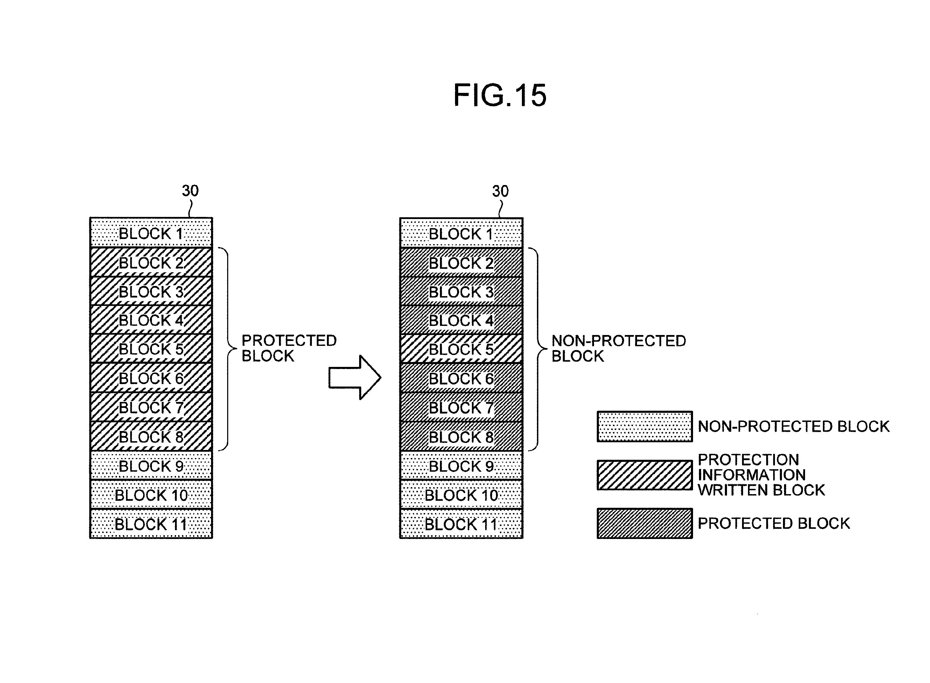

Next, the number of data rewrites by the data storing apparatus 12 according to the first embodiment will be described. FIG. 15 is a diagram for explaining the number of data rewrites. For example, to store a flag for protecting stored data in each of the blocks of the storage unit 30, a flag indicating protection of data is written in each of the blocks. In this case, as illustrated in the left side of FIG. 15, if the block 2 to the block 8 are to be protected for example, a flag indicating protection of data in a block is written to the data in each of the block 2 to the block 8. In this case, to protect data in a block already stored in the storage unit 30 for example, the data in the stored block is read and the flag is overwritten by rewriting; therefore, the number of data rewrites increases. For example, in the example on the left side of FIG. 15, if pieces of data are already stored in the blocks 2 to 4, flags of the blocks 2 to 4 are overwritten, so that the number of data rewrites increases.

In contrast, in the first embodiment, when the protection trigger is detected, data to be stored next is stored in the storage unit 30 such that the protection flag in the header information on the data is set to ON and the block number at which protection is to be started is set in the TOP block. Therefore, for example, data rewrite is not needed for pieces of data in blocks already stored in the storage unit 30, so that it is possible to prevent an increase in the number of data rewrites. For example, in the example on the right side of FIG. 15, even when pieces of data are already stored in the blocks 2 to 4, the pieces of the data in the blocks 2 to 4 are not rewritten, so that it is possible to prevent an increase in the number of data rewrites.

Furthermore, for example, to store a flag for protecting stored data in each of the blocks of the storage unit 30, and if protection is to be released, the flag of the data in each of the blocks is rewritten to a state indicating release of protection. For example, in the example on the left side of FIG. 15, flags of the pieces of the data in the block 2 to the block 8 are to be rewritten, so that the number of data rewrites increases.

In contrast, in the first embodiment, only the protection flag of a block, in which the protection flag has been set to ON and data has been stored, is updated to OFF. For example, in the example on the right side of FIG. 15, only the flag of the data in the block 5 is rewritten and the pieces of the data in the other blocks are not rewritten; therefore, it is possible to prevent an increase in the number of data rewrites.

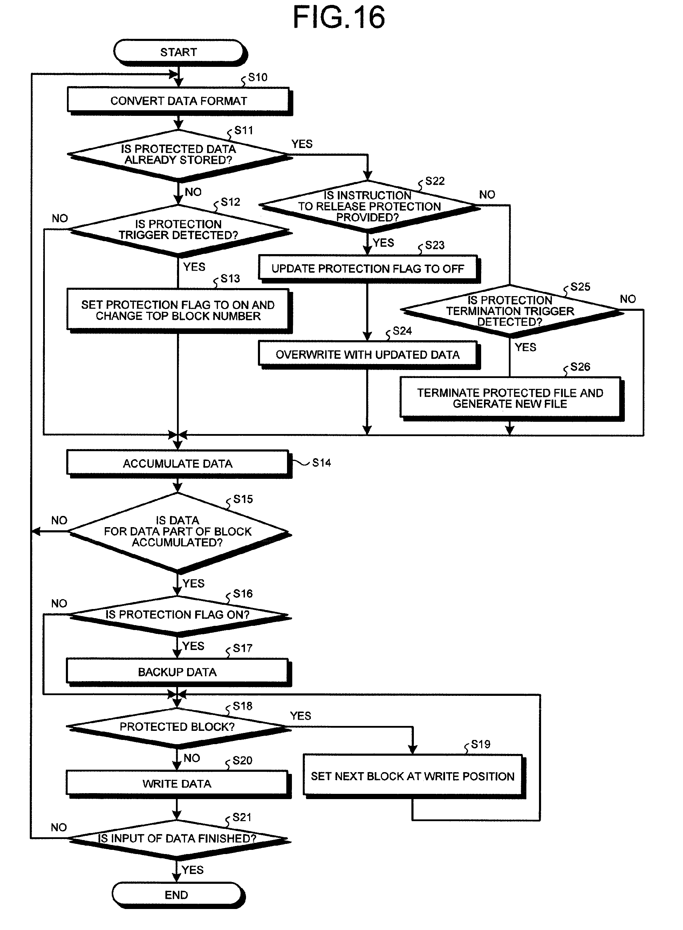

Next, the flow of a data storage process for storing data by the data storing apparatus 12 according to the first embodiment will be described. FIG. 16 is a flowchart illustrating the flow of the data storage process. The data storage process is performed at a predetermined timing, for example, at a timing at which input of video data from the camera 11 is started.

As illustrated in FIG. 16, the converting unit 50 converts video data input from the camera 11 into video data in a predetermined data format (S10). The registering unit 54 determines whether protected data for which the protection flag is set to ON is already stored in the storage unit 30 (S11). If the protected data is not stored (NO at S11), the registering unit 54 determines whether the protection trigger is detected (S12). If the protection trigger is detected (YES at S12), the registering unit 54 changes the protection flag in the header part of the data accumulated in the memory 24 to ON, and changes the TOP block to the block number of a block that stores data obtained a predetermined time before the detection of the protection trigger (S13). Then, the storing unit 52 stores and accumulates the converted data in the memory 24 (S14).

In contrast, if the protection trigger is not detected (NO at S12), process proceeds to S14 described above.

The storing unit 52 determines whether data corresponding to the size of the data part to be stored in a block of the storage unit 30 is accumulated in the memory 24 (S15). If the data is not accumulated (NO at S15), the process returns to S10 described above. In contrast, if the data is accumulated (YES at S15), the registering unit 54 determines whether the data is data in which the protection flag is set to ON (S16). If the data is data in which the protection flag is set to ON (YES at S16), the updating unit 56 copies the data and stores it in the memory 24 for backup (S17), and the process proceeds to S18. In contrast, if the data is not data in which the protection flag is set to ON (NO at S16), the process proceeds to S18.

The storing unit 52 refers to the file management information 41, and determines whether a block to be a data write target is a block to be protected, in order of the cyclic block numbers (S18). If the block is to be protected (YES at S18), the storing unit 52 specifies a block to be protected in order of the cyclic block numbers (S19), and the process returns to S18 described above. In contrast, if the block is not to be protected (NO at S18), the storing unit 52 adds the header information and stores the accumulated data in the write target block (S20).

The storing unit 52 determines whether input of data is finished (S21). If input of data is finished (YES at S21), the process ends. In contrast, if input of data is not finished (NO at S21), the process returns to S10 described above.

In contrast, if the protected data is stored (YES at S11), the updating unit 56 determines whether an instruction to release protection of the data is provided (S22). If the instruction to release protection of the data is provided (YES at S22), the updating unit 56 updates the protection flag of the backup data stored in the memory 24 to OFF (S23). Then, the updating unit 56 overwrites the data in the block, in which the protection flag has been set to ON, with the updated data (S24), and the process proceeds to S14 described above.

In contrast, if the instruction to release protection of the data is not provided (NO at S22), the managing unit 55 determines whether the protection termination trigger is detected (S25). If the protection termination trigger is not detected (NO at S25), the process proceeds to S14 described above. In contrast, if the protection termination trigger is detected (YES at S25), the managing unit 55 performs control to register pieces of accumulated data as a file of protected data, and register pieces of data from a piece of data in a subsequent block as a new file in the file management information 41 (S26), and the process proceeds to S14 described above.

As described above, the data storing apparatus 12 has a storage area that is divided into a plurality of blocks, and sequentially repeats overwriting in blocks that are not determined as protection targets among the blocks of the storage unit 30 in each of which the upper limit of the number of data rewrites is set, to thereby store pieces of sequentially-input data. Furthermore, when a protection trigger for giving an instruction to protect data is detected, the data storing apparatus 12 registers, in data stored in a block, protection information for giving an instruction to protect the data and block information indicating a block that stores data obtained a predetermined time before the detection of the protection trigger. Then, the data storing apparatus 12 manages, as blocks to be protected, blocks from the block that stores the data obtained the predetermined time before the detection to a block that stores data upon detection of a termination trigger for giving an instruction to terminate protection. Furthermore, the data storing apparatus 12 can prevent an increase in the number of data rewrites. Moreover, the data storing apparatus 12 can protect protection target data and store pieces of sequentially-input data in the storage unit 30.

Furthermore, if an instruction to release protection of data is provided, the data storing apparatus 12 updates the protection information on a block that has stored the protection information to a released state. Consequently, the data storing apparatus 12 can prevent an increase in the number of data rewrites when protection of the data is released.

Moreover, the data storing apparatus 12 stores, in the memory 24, data to be stored in a block upon detection of the protection trigger. Then, if the instruction to release protection is provided, the data storing apparatus 12 updates the protection information on the data stored in the memory 24 to a released state, and overwrites data in the block that has stored the protection information with the updated data. Consequently, the data storing apparatus 12 need not read the data in the block that has stored the protection information from the storage unit 30 at the time of releasing protection of the data, so that it is possible to reduce a processing load. Furthermore, the data storing apparatus 12 need not read the data stored in the block that has stored the protection information from the storage unit 30, so that it is possible to prevent a situation in which data is not accumulated in the storage unit 30 due to a conflict with a process of storing data in the storage unit 30, for example.

### [b] Second Embodiment

While the embodiment of the disclosed device has been described above, the disclosed technology may be embodied in various forms other than the above-described embodiment. Therefore, the other embodiments of the present invention will be described below.

For example, in the above-described embodiment, a case has been described in which an earthquake is detected as the protection trigger for giving an instruction to protect data; however, the disclosed technology is not limited to this example. The protection trigger may be anything. For example, it may be possible to protect video by using, as the protection trigger, disconnection of communication over the network 14, detection of a specific object, or a specific situation.

Furthermore, in the above-described embodiment, a case has been described in which video data is stored in the storage unit 30 as sequentially-input data and the data is protected at the time of detecting the protection trigger; however, the disclosed technology is not limited to this example. The sequentially-input data may be anything. For example, the sequentially-input data may be data of a seismic waveform detected by a seismometer, voice data input from a microphone or the like, or data in which these data are combined.

Moreover, the components of the devices illustrated in the drawings are functionally conceptual and need not necessarily be physically configured in the manner illustrated in the drawings. In other words, specific forms of distribution and integration of the devices are not limited to those illustrated in the drawings, and all or part of the devices may be functionally or physically distributed or integrated in arbitrary units depending on various loads or use conditions. For example, the processing units of the converting unit 50, the transfer unit 51, the storing unit 52, the detecting unit 53, the registering unit 54, the managing unit 55, and the updating unit 56 illustrated in FIG. 2 may appropriately be integrated or divided. In addition, for each processing function performed by each processing unit, all or any part of the processing function may be implemented by a CPU and a program analyzed and executed by the CPU or may be implemented as hardware by wired logic.

### Data storage program

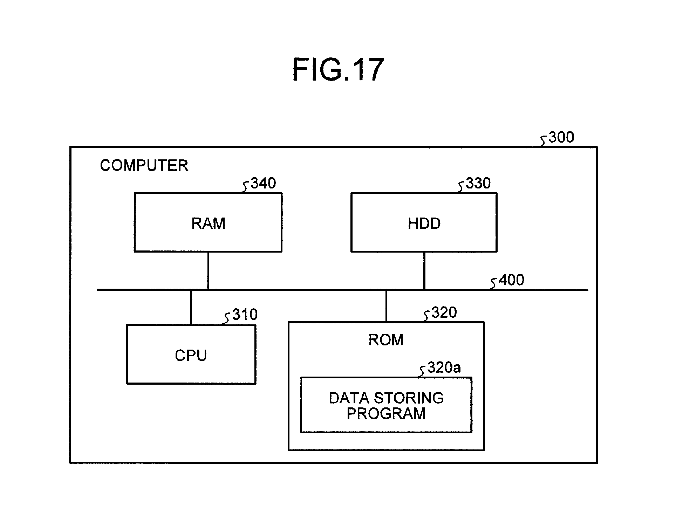

Furthermore, the various processes described in the above embodiment may be realized by executing a prepared program on a computer, such as a personal computer or a workstation. Therefore, in the following, an example of a computer system that executes a program with the same functions as those of the above-described embodiment will be described. FIG. 17 is a diagram illustrating a computer that executes a data storage program.

As illustrated in FIG. 17, a computer 300 includes a CPU 310, a Read Only Memory (ROM) 320, a Hard Disk Drive (HDD) 330, and a Random Access Memory (RAM) 340. The components 310 to 340 are connected to one another via a bus 400.

The ROM 320 stores therein, in advance, a data storage program 320a that implements the same functions as those of the processing units of the above-described embodiment. For example, the data storage program 320a that implements the same functions as those of the converting unit 50, the transfer unit 51, the storing unit 52, the detecting unit 53, the registering unit 54, the managing unit 55, and the updating unit 56 of the above-described embodiment is stored. Incidentally, the data storage program 320a may be separated appropriately.

The HDD 330 stores therein various kinds of data. For example, the HDD 330 stores therein various kinds of data for specifying an OS or characteristics.

Then, the CPU 310 reads the data storage program 320a from the ROM 320 and executes the program, so that the same operations as those of the processing units of the above-described embodiment are performed. That is, the data storage program 320a performs the same operations as those of the converting unit 50, the transfer unit 51, the storing unit 52, the detecting unit 53, the registering unit 54, the managing unit 55, and the updating unit 56 of the above-described embodiment.

Incidentally, the above-described data storage program 320a need not necessarily be stored in the ROM 320 from the beginning. The data storage program 320a may be stored in the HDD 330.

For example, the program may be stored in a "portable physical medium", such as a flexible disk (FD), a compact disc (CD)-ROM, a digital versatile disk (DVD), a magneto-optical (MO) disk, or an IC card, to be inserted into the computer 300. Then, the computer 300 may load and execute the program from these media.

Furthermore, the program may be stored in "other computers (or servers)", connected to the computer 300 via a public line, the Internet, a LAN, a WAN, or the like. Then, the computer 300 may load and execute the program from the computers.

### [Explanation of Reference]

- 10: DATA STORAGE SYSTEM
- 11: CAMERA
- 12: DATA STORING APPARATUS
- 20: INPUT UNIT
- 22: OPERATING UNIT
- 23: CARD SLOT
- 24: MEMORY
- 25: CONTROL UNIT
- 30: STORAGE UNIT
- 40: BLOCK MANAGEMENT INFORMATION
- 41: FILE MANAGEMENT INFORMATION
- 50: CONVERTING UNIT
- 51: TRANSFER UNIT
- 52: STORING UNIT
- 53: DETECTING UNIT
- 54: REGISTERING UNIT
- 55: MANAGING UNIT
- 56: UPDATING UNIT

## Claims

1. A data storing apparatus comprising:
a storing unit that stores data sequentially input by sequentially repeating overwriting in blocks not determined as protection targets among a plurality of blocks in a storage area of a storage unit, each block having an upper limit in number of data rewrites;
a registering unit that, upon detection of a protection trigger for giving an instruction to protect data, registers, in data stored in a block by the storing unit, protection information for giving an instruction to protect data and block information indicating a block that stores data obtained a predetermined time before the detection of the protection trigger; and
a managing unit that manages, as blocks to be protected, blocks from the block that stores the data obtained the predetermined time before the detection to a block that stores data upon detection of a termination trigger for giving an instruction to terminate protection.

2. The data storing apparatus according to claim 1, further comprising an updating unit that, when an instruction to release protection of data is provided, updates the protection information on a block that has stored the protection information to a released state.

3. The data storing apparatus according to claim 2, wherein the updating unit stores, in a memory, data to be stored in a block by the storing unit upon detection of the protection trigger, and when the instruction to release protection is provided, the updating unit updates the protection information on the data stored in the memory to a released state, and overwrites data in the block that has stored the protection information with the updated data.

4. A data storing method comprising:
storing data sequentially input by sequentially repeating overwriting in blocks not determined as protection targets among a plurality of blocks in a storage area of a storage unit, each block having an upper limit in number of data rewrites;
registering, upon detection of a protection trigger for giving an instruction to protect data, protection information for giving an instruction to protect data and block information indicating a block that stores data obtained a predetermined time before the detection of the protection trigger, in stored data; and
managing, as blocks to be protected, blocks from the block that stores the data obtained the predetermined time before the detection to a block that stores data upon detection of a termination trigger for giving an instruction to terminate protection.

5. A data storing program causing a computer to execute a process comprising:
storing data sequentially input by sequentially repeating overwriting in blocks not determined as protection targets among a plurality of blocks in a storage area of a storage unit, each block having an upper limit in number of data rewrites;
registering, upon detection of a protection trigger for giving an instruction to protect data, protection information for giving an instruction to protect data and block information indicating a block that stores data obtained a predetermined time before the detection of the protection trigger, in stored data; and
managing, as blocks to be protected, blocks from the block that stores the data obtained the predetermined time before the detection to a block that stores data upon detection of a termination trigger for giving an instruction to terminate protection.
